# EUROPÄISCHE PATENTSCHRIFT

(11) **EP 1 844 856 B1**
(45) Veröffentlichungstag und Bekanntmachung des Hinweises auf die Patenterteilung: **25.08.2010**
(21) Anmeldenummer: 07104968.8
(22) Anmeldetag: 27.03.2007
(51) Int. Cl.: B01J 23/94, B01J 38/12, H01M 8/06, H01M 8/04

(54) **Brennstoffzellensystem und zugehöriges Betriebsverfahren**
Fuel cell system and corresponding operating method
Système de cellules combustibles et procédé de fonctionnement correspondant

(30) Priorität: 12.04.2006 DE 102006017617
(43) Veröffentlichungstag der Anmeldung: 17.10.2007
(73) Patentinhaber: J. Eberspächer GmbH & Co. KG, 73730 Esslingen (DE)
(72) Erfinder: Kaupert, Andreas, 73730 Esslingen (DE); Kienzle, Birgit, 89073 Ulm (DE)
(74) Vertreter: BRP Renaud & Partner

(56) Entgegenhaltungen:
- EP-A- 1 198 020
- DE-A1- 10 127 199
- US-A1- 2003 093 950
- US-B1- 6 608 463

## Beschreibung

Die vorliegende Erfindung betrifft ein Brennstoffzellensystem, insbesondere für ein Kraftfahrzeug, mit den Merkmalen des Oberbegriffs des Anspruchs 1. Die Erfindung betrifft außerdem ein Verfahren zum Ausschalten eines derartigen Brennstoffzellensystems.

Ein derartiges Brennstoffzellensystem ist beispielsweise aus der EP 1 198 020 A2 bekannt und umfasst eine Brennstoffzelle zur Stromerzeugung aus Oxidatorgas und Brenngas, die einen Anodeneingang, einen Anodenausgang, einen Kathodeneingang, einen Kathodenausgang und wenigstens einen Stromanschluss aufweist, sowie einen Reformer zur Brenngaserzeugung aus Oxidatorgas und Kraftstoff, der einen Kraftstoffeingang, einen Oxidatoreingang und einen Brenngasausgang aufweist. Dabei verbindet eine Brenngasleitung den Brenngasausgang mit dem Anodeneingang. Eine Oxidatorzuführungseinrichtung zur Versorgung der Brennstoffzelle und des Reformers mit Oxidatorgas ist an den Kathodeneingang und an den Oxidatoreingang angeschlossen. Eine Kraftstoffzuführungseinrichtung zur Versorgung des Reformers mit Kraftstoff ist an den Kraftstoffeingang angeschlossen. Üblicherweise ist eine Steuerung zum Betätigen der Oxidatorzuführungseinrichtung und der Kraftstoffzuführungseinrichtung vorgesehen.

Weitere Brennstoffzellensysteme sind beispielsweise aus der DE 10 2005 001 361, aus der DE 103 15 255 A1, aus der US 2003/0 093 950 A1, aus der DE 101 27 199 A1, aus der US 6,608,463 und aus der DE 10 2004 002 337 A1 bekannt.

Der Reformer derartiger Brennstoffzellensysteme generiert ein wasserstoffhaltiges Reformat oder Brenngas, wozu er beispielsweise mit Hilfe eines Katalysators ein fettes Gemisch aus Oxidatorgas und Kraftstoff mittels partieller Oxidation umsetzt. Hierbei können sich Partikel, insbesondere Rußpartikel, am oder im Katalysator ablagern. Diese Partikel- oder Rußablagerungen fallen verstärkt an, wenn das Brennstoffzellensystem mit einer Anodenabgasrückführung arbeitet, bei der Anodenabgas erneut dem Reformer eingangsseitig zur Gemischbildung zugeführt wird. Die zunehmende Partikel- bzw. Rußbeladung erhöht den Durchströmungswiderstand des Katalysators und beeinträchtigt die Funktionsfähigkeit des Reformers und somit des gesamten Brennstoffzellensystems.

Bei Partikelfiltern oder Rußfiltern in Abgasanlagen von Brennkraftmaschinen stellt sich ein ähnliches Problem. Zur Regeneration des Partikelfilters ist es bekannt, die Partikel- bzw. Rußbeladung während des Betriebs der Brennkraftmaschine abzubrennen. Ein Abbrennen der Partikelbeladung des Katalysators im Reformer des Brennstoffzellensystems während des Betriebs des Brennstoffzellensystems scheidet aus, da die dabei auftretenden Temperaturen die Anodenseite der Brennstoffzelle zerstören würden und die dabei entstehenden Reaktionsprodukte den Reformerprozess sowie den Brennstoffzellenprozess erheblich stören würden.

Die vorliegende Erfindung beschäftigt sich mit dem Problem, für ein Brennstoffzellensystem einen Weg zur Regeneration des Katalysators aufzuzeigen, bei dem die Gefahr einer Beschädigung der Anodenseite der Brennstoffzelle reduziert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, beim Ausschalten des Brennstoffzellensystems einen Regenerationsprozess zum Regenerieren des Katalysators durchzuführen, wobei dieser Regenerationsprozess erst dann gestartet wird, wenn eine Temperatur der Brennstoffzelle unter einer vorbestimmten Brennstoffzellengrenztemperatur liegt. Die Erfindung nutzt dabei die Erkenntnis, dass die Gefahr einer Beschädigung der Anodenseite der Brennstoffzelle in erster Linie nicht in den während des Regenerationsprozesses entstehenden hohen Temperaturen, sondern in der hohen Temperatur der Anodenseite beim Ausschalten der Brennstoffzelle liegt. Die Anodenseite ist bei diesen oberhalb der vorbestimmten Brennstoffzellengrenztemperatur liegenden Temperatur sehr empfindlich gegenüber den bei der Regeneration des Katalysators entstehenden Regenerationsprodukte. Beispielsweise kann es oberhalb dieser Brennstoffzellengrenztemperatur durch den in den Regenerationsprodukten enthaltenen Sauerstoff zu einer Reoxidation von Nickel auf der Anode kommen. Die damit einhergehende Gefügeänderung würde die Anode und letztlich die Brennstoffzelle zerstören. Erst wenn die Brennstoffzelle unter besagte Brennstoffzellengrenztemperatur abgekühlt ist, sind die Produkte des Regenerationsprozesses für die Anodenseite der Brennstoffzelle nahezu ungefährlich. Durch den erfindungsgemäßen Vorschlag, mit dem Regenerationsprozess solange zu warten, bis die Brennstoffzelle hinreichend abgekühlt ist, lässt sich die Gefahr einer anodenseitigen Beschädigung der Brennstoffzelle durch die während des Regenerationsvorgangs entstehenden Reaktionsprodukte erheblich reduzieren.

Der Regenerationsprozess kann beispielsweise so ausgestaltet sein, dass der Reformer für die Regeneration des Katalysators mit Oxidatorgas beaufschlagt wird. Bei Erreichen der Brennstoffzellengrenztemperatur in der Brennstoffzelle sind die Temperaturen im Katalysator regelmäßig noch so hoch, dass die Oxidatorzufuhr zum Abbrand der Partikel führt. Alternativ ist es ebenso möglich, die Regeneration dadurch zu realisieren, dass der Reformer als Brenner betrieben wird, das bedeutet, dass dem Reformer Kraftstoff und Oxidatorgas mit Sauerstoffüberschuss zugeführt werden, wodurch sich eine Flamme zum Abbrennen der Partikelbeladung bilden kann.

Vorzugsweise wird der Regenerationsprozess temperaturabhängig gesteuert. Beispielsweise wird die Oxidatorversorgung des Reformers bzw. der Brennerbetrieb des Reformers reduziert und/oder unterbrochen, sobald und solange die Temperatur der Brennstoffzelle die Brennstoffzellengrenztemperatur übersteigt und/oder sobald und solange eine Temperatur des Reformers eine vorbestimmte Reformergrenztemperatur übersteigt.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

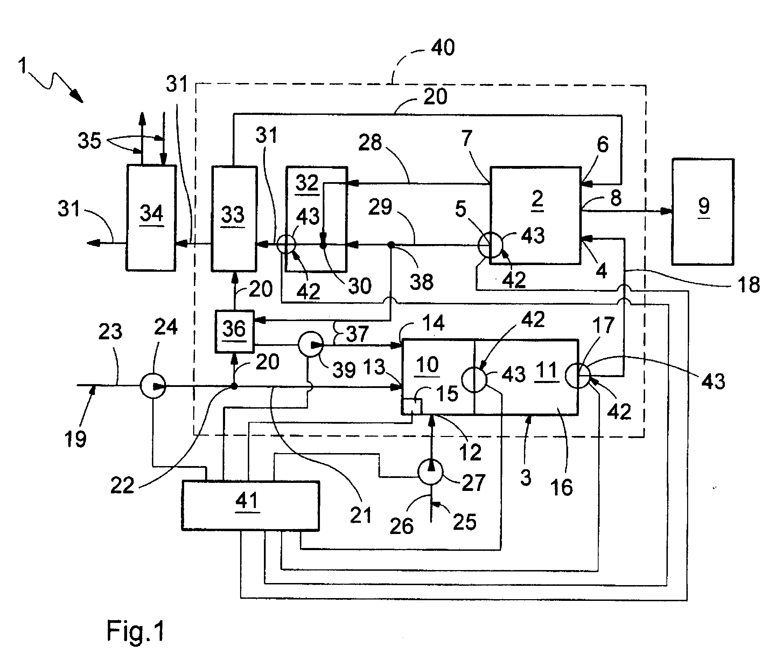

Die einzige Figur 1 zeigt eine schematische, schaltplanartige Prinzipdarstellung eines Brennstoffzellensystems.

Entsprechend Fig. 1 umfasst ein Brennstoffzellensystem 1, das in einem Kraftfahrzeug angeordnet sein kann, zumindest eine Brennstoffzelle 2 und einen Reformer 3. Die Brennstoffzelle 2 dient zur Erzeugung von Strom, den sie in bekannter Weise aus einem Oxidatorgas und einem Brenngas erzeugt. Die Brennstoffzelle 2 kann beispielsweise als Festkörper-Brennstoffzelle (SOFC) und vorzugsweise als Hochtemperatur-Brennstoffzelle ausgebildet sein. Für die Stromerzeugung wird die Brennstoffzelle 2 kathodenseitig mit dem Oxidatorgas versorgt, das beispielsweise durch Luft oder durch reinen Sauerstoff gebildet ist. Außerdem wird die Brennstoffzelle 2 im Betrieb anodenseitig mit dem Brenngas versorgt, das wasserstoffhaltig ist. Dementsprechend weist die Brennstoffzelle 2 einen Anodeneingang 4, einen Anodenausgang 5, einen Kathodeneingang 6, einen Kathodenausgang 7 und zumindest einen elektrischen Anschluss oder Stromabschluss 8 auf. Über den wenigstens einen Stromanschluss 8 ist ein elektrischer Verbraucher 9 an die Brennstoffzelle 2 bzw. an das Brennstoffzellensystem 1 anschließbar.

Bei einem in einem Kraftfahrzeug angeordneten Brennstoffzellensystem 1 handelt es sich beim elektrischen Verbraucher 9 vorzugsweise um solche elektrische Verbraucher 9, die für den normalen Fahrbetrieb des Fahrzeugs nicht erforderlich sind. Vielmehr dienen diese Verbraucher 9 dem Fahrzeugführer zur Komfortsteigerung, wenn das Fahrzeug ruht, also wenn eine Brennkraftmaschine des Fahrzeugs ausgeschaltet ist. Das Brennstoffzellensystem 1 stellt im Fahrzeug demnach eine motorunabhängige Stromversorgung bereit. Verbraucher 9 können beispielsweise sein eine Klimaanlage, ein Fernsehgerät, ein Kühlschrank, eine Kochstelle, ein Mikrowellenherd und das Brennstoffzellensystem 1 selbst.

Der Reformer 3 dient zur Erzeugung des wasserstoffhaltigen Brenngases aus Oxidatorgas, vorzugsweise Luft oder Sauerstoff, und aus Kraftstoff, vorzugsweise Kohlenwasserstoffe. Vorzugsweise wird als Kraftstoff zur Versorgung des Reformers 3 derjenige Kraftstoff verwendet, der in dem mit dem Brennstoffzellensystem 1 ausgestatteten Fahrzeug zur Versorgung einer Brennkraftmaschine ohnehin zur Verfügung steht.

Der Reformer 3 umfasst einen Gemischbildungsabschnitt 10 und unmittelbar daran angrenzend einen Katalysatorabschnitt 11. Im Gemischbildungsabschnitt 10 erfolgt die Bildung eines Gemischs aus Oxidatorgas und Kraftstoff. Gleichzeitig kann der Gemischbildungsabschnitt 10 auch als Verdampfer arbeiten, wenn flüssiger Kraftstoff verwendet wird. Am Gemischbildungsabschnitt 10 sind ein Kraftstoffeingang 12 und ein Oxidatoreingang 13 des Reformers 3 angeordnet. Des Weiteren ist noch ein Anodenabgaseingang 14 vorgesehen, der weiter unten näher erläutert wird. Außerdem enthält der Gemischbildungsabschnitt 10 optional eine Zündeinrichtung 15, die es ermöglicht, den Gemischbildungsabschnitt 10 bzw. den Reformer 3 als Brenner zu betreiben.

Der Katalysatorabschnitt 11 dient zur Umsetzung des vom Gemischbildungsabschnitt 10 bereitgestellten Gemischs in wasserstoffhaltiges Brenngas. Hierzu umfasst der Katalysatorabschnitt 11 einen Katalysator 16 aus einem zur Herstellung eines derartigen Brenngases geeigneten Katalysatormaterial, das z. B. auf ein geeignetes Substrat, z.B. aus Keramik oder Metall, aufgebracht ist. Am Katalysatorabschnitt 11 ist ein Brenngasausgang 17 des Reformers 3 ausgebildet. Der Brenngasausgang 17 ist über eine Brenngasleitung 18 mit dem Anodeneingang 4 verbunden.

Zur Versorgung der Brennstoffzelle 2 und des Reformers 3 mit Oxidatorgas ist eine Oxidatorzuführungseinrichtung 19 vorgesehen, die beispielsweise eine erste Oxidatorleitung 20, die an den Kathodeneingang 6 angeschlossen ist, und eine zweite Oxidatorleitung 21 aufweist, die an den Oxidatoreingang 13 angeschlossen ist. Die beiden Oxidatorleitungen 20, 21 zweigen bei 22 von einer gemeinsamen Oxidatorzuführungsleitung 23 ab, in der ein Gebläse oder eine Pumpe 24 zum Antreiben des Oxidatorgases zur Brennstoffzelle 2 bzw. zum Reformer 3 angeordnet ist.

Zur Versorgung des Reformers 3 mit Kraftstoff ist eine Kraftstoffzuführungseinrichtung 25 vorgesehen, die eine an den Kraftstoffeingang 12 angeschlossene Kraftstoffzuführungsleitung 26 sowie eine darin angeordnete Pumpe 27 aufweist.

An den Kathodenausgang 7 ist eine Kathodenabgasleitung 28 zum Abführen von Kathodenabgas angeschlossen. An den Anodenausgang 5 ist eine Anodenabgasleitung 29 zum Abführen von Anodenabgas angeschlossen. Die Kathodenabgasleitung 28 ist bei 30 mit der Anodenabgasleitung 29 zusammengeführt, die ab dieser Anschlussstelle 30 eine gemeinsame Brennstoffzellenabgasleitung 31 zum Abführen von Anodenabgas und Kathodenabgas bildet. Die Anschlussstelle 30 ist hier innerhalb eines Restgasbrenners 32 angeordnet bzw. sind die Abgasleitungen 28, 29 und 31 an den Restgasbrenner 32 angeschlossen. Der Restgasbrenner 32 dient dazu, Anodenabgas und Kathodenabgas zu verbrennen, um dadurch nicht oder nicht vollständig umgesetzte Reste des Brenngases umzusetzen. Hierdurch werden zum einen die Emissionswerte des Brennstoffzellensystems 1 verbessert. Zum anderen wird im Brennstoffzellenabgas Wärme freigesetzt. Durch Nutzung dieser Wärme lässt sich der Wirkungsgrad des Brennstoffzellensystems 1 verbessern. Hierzu weist das Brennstoffzellensystem 1 außerdem einen Wärmeübertrager 33 auf, der im folgenden auch als Hauptwärmeübertrager 33 bezeichnet wird. Der Hauptwärmeübertrager 33 ist einerseits in die Brennstoffzellenabgasleitung 31 stromab des Restgasbrenners 32 und andererseits in die erste Oxidatorleitung 20 eingebunden. Der Hauptwärmeübertrager 33 ermöglich somit eine wärmeübertragende Kopplung zwischen den Abgasen der Brennstoffzelle 2 bzw. des Restgasbrenners 32 und dem der Brennstoffzelle 2 zugeführten Oxidatorgas.

Des Weiteren kann das Brennstoffzellensystem 1 optional mit einem weiteren Wärmeübertrager 34 ausgestattet sein, der im folgenden als Zusatzwärmeübertrager 34 bezeichnet wird. Der Zusatzwärmeübertrager 34 ist einerseits in die Brennstoffzellenabgasleitung 31 stromab des Hauptwärmeübertragers 33 und andererseits in einen Abwärmepfad 35 eingebunden. Der Abwärmepfad 35 dient zur Nutzung von im Abgas der Brennstoffzelle 2 bzw. des Restgasbrenners 32 enthaltener Wärme. Beispielsweise ist der Abwärmepfad 35 durch eine Kühlmittelleitung eines Kühlmittelkreises der Brennkraftmaschine des Kraftfahrzeugs gebildet. Das Brennstoffzellensystem 1 kann dann beispielsweise als Zuheizer für die Brennkraftmaschine genutzt werden. Alternativ kann der Abwärmepfad 35 durch eine Warmluftleitung einer Innenheizeinrichtung des Fahrzeugs gebildet sein. Das Brennstoffzellensystem 1 lässt sich dann als Standheizung für das Fahrzeug verwenden, wenn ein Gebläse der Innenraumheizeinrichtung einen der Verbraucher 9 bildet. Alternativ kann der Abwärmepfad 35 auch durch die zweite Oxidatorleitung 21 gebildet sein, wodurch es möglich ist, auch das dem Reformer 3 zugeführte Oxidatorgas vorzuwärmen.

Des Weiteren kann das Brennstoffzellensystem 1 optional mit einem Rezirkulationswärmeübertrager 36 ausgestattet sein. Dieser ist einerseits in die erste Oxidatorleitung 20 stromauf des Hauptwärmeübertragers 33 und andererseits in eine Rückführleitung 37 eingebunden. Die Rückführleitung 37 ist über eine Anschlussstelle 38 an die Anodenabgasleitung 29 und über den Anodenabgaseingang 14 an den Reformer 3 angeschlossen. Die Rückführleitung 37 ermöglicht eine Rückführung von Anodenabgas über den Rezirkulationswärmeübertrager 36 in den Reformer 3. Die im rückgeführten Anodenabgas mitgeführte Wärme wird hierbei zur Vorwärmung des der Brennstoffzelle 2 zugeführten Oxidatorgases genutzt. In der Rückführleitung 37 kann zwischen dem Rezirkulationswärmeübertrager 36 und dem Reformer 3 ein Gebläse 39 zum Antreiben des Anodenabgases enthalten sein. Alternativ kann der Rezirkulationswärmeübertrager 36 einerseits in die zweite Oxidatorleitung 21 und andererseits in die Rückführleitung 37 eingebunden sein.

Das hier gezeigte Brennstoffzellensystem 1 weist außerdem eine thermisch isolierende Isolationsbox 40 auf, die hier durch eine unterbrochene Linie angedeutet ist. Innerhalb der Isolationsbox 40 sind die besonders heißen Komponenten des Brennstoffzellensystems 1 angeordnet. In jedem Fall sind im Inneren der Isolationsbox 40 die Brennstoffzelle 2, der Restgasbrenner 32 und der Hauptwärmeübertrager 33 angeordnet. Im gezeigten Beispiel sind außerdem der Reformer 3 und der Rezirkulationswärmeübertrager 36 innerhalb der Isolationsbox 40 angeordnet. Bei anderen Ausführungsformen können der Rezirkulationswärmeübertrager 36 und/oder der Reformer 3 außerhalb der Isolationsbox 40 angeordnet sein.

Das Brennstoffzellensystem 1 weist außerdem eine Steuerung 41 sowie eine Sensorik 42 auf. Die Sensorik 42 ist im vorliegenden Fall durch mehrere Temperatursensoren 43 gebildet, die an geeigneten Messstellen angeordnet sind. Beispielsweise befindet sich ein Temperatursensor 43 zwischen dem Gemischbildungsabschnitt 10 und dem Katalysatorabschnitt 11 des Reformers 3. Ein weiterer Temperatursensor 43 ist am Brenngasausgang 17 angeordnet. Ein Temperatursensor 43 ist außerdem am Ausgang des Restgasbrenners 32 angeordnet. Ferner ist hier noch am Anodenausgang 5 ein weiterer Temperatursensor 43 angeordnet. Die Sensorik 42 ermöglicht somit die Messung einer Temperatur der Brennstoffzelle 2, vorzugsweise an deren Anodenseite. Des Weiteren ermöglicht die Sensorik 42 die Messung einer Temperatur des Reformers 3, insbesondere eine Temperatur am Katalysatoreinlass sowie eine Temperatur am Katalysatorauslass. Ebenso kann eine Temperatur am Restgasbrennerauslass ermittelt werden.

Die Steuerung 41 ist eingangsseitig an die Sensorik 42 bzw. an deren Temperatursensoren 43 und ausgangsseitig an die Oxidatorzuführungseinrichtung 19 bzw. an deren Gebläse 24 und an die Kraftstoffzuführungseinrichtung 25 bzw. an deren Pumpe 27 angeschlossen. Des Weiteren ist die Steuerung 41 hier an die Zündeinrichtung 15 und an das Gebläse 39 der Rückführleitung 37 angeschlossen. Die Steuerung 41 ist zum Betreiben des Brennstoffzellensystems 1 bzw. zur Betätigung einzelner Komponenten des Brennstoffzellensystems 1 ausgestaltet. Insbesondere ist die Steuerung 41 softwaremäßig und/oder hardwaremäßig zur Durchführung des im folgenden näher beschriebenen Betriebsverfahrens ausgebildet.

Im normalen Betrieb des Brennstoffzellensystems 1 erreicht die Brennstoffzelle 2, insbesondere wenn sie als Hochtemperatur-Brennstoffzelle ausgestaltet ist, relativ hohe Temperaturen. Auch der Katalysator 16 im Reformer 3 wird vergleichsweise heiß. Gleichzeitig kommt es im Katalysator 16 zu einer Ablagerung von Partikeln, vorzugsweise von Rußpartikeln. Um diese Partikel wieder vom Katalysator 11 entfernen zu können, wird regelmäßig beim Abschalten des Brennstoffzellensystems 1 ein Regenerationsprozess zum Regenerieren des Katalysators 16 durchgeführt. Dieser Regenerationsprozess kann grundsätzlich bei jedem Ausschaltvorgang automatisch aktiviert werden, ebenso ist es möglich, vor der Aktivierung des Regenerationsprozesses vorbestimmte Randbedingungen abzufragen.

Im normalen Betrieb des Brennstoffzellensystems 1 arbeitet der Reformer 3 in einem Brenngaserzeugungsbetrieb, bei dem er aus dem zugeführten Kraftstoff und dem zugeführten Oxidatorgas das wasserstoffhaltige Brenngas generiert. Hierzu sind die Kraftstoffzuführungseinrichtung 25 und die Oxidatorzuführungseinrichtung 19 in Betrieb und versorgen den Reformer 3 mit Kraftstoff bzw. Oxidatorgas. Zum Ausschalten des Brennstoffzellensystems 1 wird nun zunächst der Brenngaserzeugungsbetrieb des Reformers 3 beendet. Hierzu schaltet beispielsweise die Steuerung 41 die Zufuhr von Oxidatorgas und Kraftstoff ab. In der Folge wird auch kein Brenngas mehr produziert, wodurch auch der Stromerzeugungsprozess der Brennstoffzelle 2 beendet wird. Erst nach Beendigung des Brenngaserzeugungsbetriebs wird ein Regenerationsprozess zur Regeneration des Katalysators 16 durchgeführt. Allerdings wird dieser Regenerationsprozess erst dann gestartet, wenn die Brennstoffzelle 2 unter eine vorbestimmte Brennstoffzellengrenztemperatur T_{B} abgekühlt ist. Diese Brennstoffzellengrenztemperatur T_{B} ist dabei so bemessen, dass die Gefahr einer Beschädigung der Anodenseite der Brennstoffzelle 2 beseitigt oder zumindest erheblich reduziert ist, wenn die Anodenseite im Verlaufe des Regenerationsbetriebs mit Regenerationsprodukten in Kontakt kommt. Beispielsweise beträgt die Brennstoffzellengrenztemperatur T_{B} etwa 500°C. Sobald also die Brennstoffzelle 2 von ihrer Betriebstemperatur, die etwa zwischen 650°C und 800°C liegen kann, hinreichend abgekühlt ist, startet die Steuerung 41 den Regenerationsprozess für den Katalysator 16.

Der Regenerationsprozess kann beispielsweise dadurch realisiert werden, dass der Reformer 3 mit Oxidatorgas versorgt wird. Hierzu betätigt die Steuerung 41 z. B. das Gebläse 24, um so Oxidatorgas dem Reformer 3 zuzuführen. Wichtig ist, dass dabei kein Kraftstoff zugeführt wird. Bei hinreichend hoher Temperatur des Katalysators 16 führt die Beaufschlagung des Katalysators 16 mit Oxidator zu einer Abbrandreaktion der Partikelbeladung.

Während des Regenerationsprozesses führt der Abbrand der Partikelbeladung zu einer Temperaturerhöhung im Katalysator 16 und somit im Reformer 3. Über die dabei gebildeten heißen Verbrennungsprodukte kann es außerdem zu einer Temperaturerhöhung in der Brennstoffzelle 2 kommen.

Während des Regenerationsprozesses werden beispielsweise die Temperatur der Brennstoffzelle 2 und/oder die Temperatur des Katalysators 16 überwacht. Falls während des Regenerationsprozesses die Temperatur der Brennstoffzelle wieder über die Brennstoffzellengrenztemperatur T_{B} ansteigt, veranlasst die Steuerung 41 eine Reduzierung und/oder eine Unterbrechung der Oxidatorzuführung. Alternativ oder zusätzlich kann vorgesehen sein, dass die Oxidatorzuführung auch dann reduziert bzw. unterbrochen wird, wenn die Temperatur des Katalysators 16 bzw. des Reformers 3 eine vorbestimmte Reformergrenztemperatur T_{R} übersteigt.

Durch das Ausschalten oder das, insbesondere gestufte, Reduzieren und gegebenenfalls nachfolgende Ausschalten der Oxidatorversorgung wird der Regenerationsvorgang geschwächt und insbesondere unterbrochen, so dass die Brennstoffzelle 2 und der Reformer 3 bzw. der Katalysator 16 abkühlen können. Sobald die Temperatur der Brennstoffzelle 2 wieder unter die Brennstoffzellengrenztemperatur T_{B} fällt und/oder sobald die Temperatur des Reformers 3 unter die Reformergrenztemperatur T_{R} fällt, wird der gehemmte bzw. unterbrochene Regenerationsprozess verstärkt bzw. fortgesetzt, das heißt, die Oxidatorzuführung wird wieder erhöht bzw. neu gestartet.

Über die Kontrolle der Temperaturen kann außerdem das Ende des Regenerationsprozesses ermittelt werden. Sobald die Steuerung 41 während des Regenerationsprozesses, also während der Oxidatorgaszuführung zum Reformer 3 eine Abkühlung der Brennstoffzelle 2 bzw. des Reformers 3 feststellt, ist klar, dass im Katalysator 16 kein Abbrand mehr erfolgt, so dass die Regeneration des Katalysators 16 beendet ist. In der Folge kann die Steuerung 41 den Regenerationsprozess beenden, also insbesondere die Oxidatorzuführung stoppen.

Bei einer anderen Ausführungsform kann der Regenerationsprozess auch dadurch realisiert werden, dass der Reformer 3 als Brenner betrieben wird. Beim Brennerbetrieb des Reformers 3 werden von der Steuerung 41 die Kraftstoffzuführungseinrichtung 25 und die Oxidatorzuführungseinrichtung 19 so angesteuert, dass im Gemischbildungsabschnitt 10 ein mageres Gemisch gebildet wird, das bei seiner Zündung beispielsweise mittels der Zündeinrichtung 15 zu einer Flamme führt. Mit Hilfe der Flamme kann der Katalysator 16 so weit aufgeheizt werden, dass ein Abbrand der Partikelablagerung erfolgt. Die Durchführung des Regenerationsprozesses mit Hilfe des als Brenner betriebenen Reformers 3 ist beispielsweise dann vorteilhaft, wenn der Katalysator 16 bzw. der Reformer 3 vor Beginn des Regenerationsprozesses bereits so weit abkühlt, dass die Zuführung von Oxidatorgas alleine keinen Abbrand der Partikelablagerung ermöglicht.

Auch hier kann vorgesehen sein, den Brennerbetrieb des Reformers 3 zu reduzieren bzw. unterbrechen, sobald und solange sich die Brennstoffzelle 2 über die Brennstoffzellengrenztemperatur T_{B} aufheizt bzw. sobald und solange sich der Reformer 3 über die Reformergrenztemperatur T_{R} aufheizt. Die jeweilige Reduzierung bzw. Unterbrechung wird dann wieder beendet und der Brennerbetrieb des Reformers 3 intensiviert bzw. erneut gestartet, wenn die Temperatur in der Brennstoffzelle 2 bzw. im Reformer 3 wieder unter die jeweils vorbestimmte Grenztemperatur T_{B} bzw. T_{R} fällt.

## Patentansprüche

1. Brennstoffzellensystem, insbesondere für ein Kraftfahrzeug,
- mit einer Brennstoffzelle (2) zur Stromerzeugung aus Oxidatorgas und aus Brenngas, die einen Anodeneingang (4), einen Anodenausgang (5), einen Kathodeneingang (6), einen Kathodenausgang (7) und wenigstens einen Stromanschluss (8) aufweist,
- mit einem Reformer (3), der einen Katalysator (16) zur Brenngaserzeugung aus Oxidatorgas und aus Kraftstoff enthält und der einen Kraftstoffeingang (12), einen Oxidatoreingang (13) und einen Brenngasausgang (17) aufweist,
- mit einer Brenngasleitung (18), die den Brenngasausgang (17) mit dem Anodeneingang (4) verbindet,
- mit einer Oxidatorzuführungseinrichtung (19) zur Versorgung der Brennstoffzelle (2) und des Reformers (3) mit Oxidatorgas,
- mit einer Kraftstoffzuführungseinrichtung (25) zur Versorgung des Reformers (3) mit Kraftstoff,
- mit einer Steuerung (41) zum Betätigen der Oxidatorzuführungseinrichtung (19) und der Kraftstoffzuführungseinrichtung (25),
**dadurch gekennzeichnet,**
- **dass** eine Sensorik (42) zur Ermittlung der Temperatur der Brennstoffzelle (2) vorgesehen ist,
- **dass** die Steuerung (41) so ausgestaltet ist, dass sie beim Ausschalten des Brennstoffzellensystems (1) einen Regenerationsprozess zum Regenerieren des Katalysators (16) durchführt,
- **dass** die Steuerung (41) so ausgestaltet ist, dass sie den Regenerationsprozess erst dann startet, wenn die Temperatur der Brennstoffzelle (2) unter einer vorbestimmten Brennstoffzellengrenztemperatur (T_{B}) liegt.

2. Brennstoffzellensystem nach Anspruch 1,
**dadurch gekennzeichnet,**
**dass** die Steuerung (41) so ausgestaltet ist, dass sie während des Regenerationsprozesses die Oxidatorzuführungseinrichtung (19) zur Versorgung des Reformers (3) mit Oxidatorgas ansteuert.

3. Brennstoffzellensystem nach Anspruch 2,
**dadurch gekennzeichnet,**
- **dass** die Steuerung (41) so ausgestaltet ist, dass sie während des Regenerationsprozesses die Oxidatorzuführungseinrichtung (19) zum Reduzieren oder Beenden der Versorgung des Reformers (3) mit Oxidatorgas ansteuert, sobald die Temperatur der Brennstoffzelle (2) über der Brennstoffzellengrenztemperatur (T_{B}) liegt, und/oder
- **dass** die Sensorik (42) auch zur Ermittlung einer Temperatur des Reformers (3) ausgestaltet ist, und/oder
- **dass** die Steuerung (41) so ausgestaltet ist, dass sie während des Regenerationsprozesses die Oxidatorzuführungseinrichtung (19) zum Reduzieren oder Beenden der Versorgung des Reformers (3) mit Oxidatorgas ansteuert, sobald die Temperatur des Reformers (3) über einer vorbestimmten Reformergrenztemperatur (T_{R}) liegt, und/oder
- **dass** die Steuerung (41) so ausgestaltet ist, dass sie während des Regenerationsprozesses die Oxidatorzuführungseinrichtung (19) zum Erhöhen oder zum erneuten Starten der Versorgung des Reformers (3) mit Oxidatorgas ansteuert, sobald die Temperatur der Brennstoffzelle (2) wieder unter der Brennstoffzellengrenztemperatur (T_{B}) liegt und/oder sobald die Temperatur des Reformers (3) wieder unter der Reformergrenztemperatur (T_{R}) liegt, und/oder
- **dass** die Steuerung (41) so ausgestaltet ist, dass sie den Regenerationsprozess beendet, sobald die Versorgung des Reformers (3) mit Oxidatorgas zu einer Temperaturabsenkung in der Brennstoffzelle (2) und/oder im Reformer (3) führt.

4. Brennstoffzellensystem nach Anspruch 1,
**dadurch gekennzeichnet,**
**dass** die Steuerung (41) so ausgestaltet ist, dass sie während des Regenerationsprozesses den Reformer (3) als Brenner betreibt und die Oxidatorzuführungseinrichtung (19) und die Kraftstoffzuführungseinrichtung (25) zur Versorgung des Reformers (3) mit Oxidatorgas und Kraftstoff entsprechend ansteuert.

5. Brennstoffzellensystem nach Anspruch 4,
**dadurch gekennzeichnet,**
- **dass** die Steuerung (41) so ausgestaltet ist, dass sie während des Regenerationsprozesses den Brennerbetrieb des Reformers (3) reduziert oder beendet, sobald die Temperatur der Brennstoffzelle (2) über der Brennstoffzellengrenztemperatur (T_{B}) liegt, und/oder
- **dass** die Sensorik (42) auch zur Ermittlung einer Temperatur des Reformers (3) ausgestaltet ist, und/oder
- **dass** die Steuerung (41) so ausgestaltet ist, dass sie während des Regenerationsprozesses den Brennerbetrieb des Reformers (3) reduziert oder beendet, sobald die Temperatur des Reformers (3) über einer vorbestimmten Reformergrenztemperatur (T_{R}) liegt, und/oder
- **dass** die Steuerung (41) so ausgestaltet ist, dass sie während des Regenerationsprozesses den Brennerbetrieb des Reformers (3) erhöht oder erneut startet, sobald die Temperatur der Brennstoffzelle (2) wieder unter der Brennstoffzellengrenztemperatur (T_{B}) liegt und/oder sobald die Temperatur des Reformers (3) wieder unter der Reformergrenztemperatur (T_{R}) liegt.

6. Verfahren zum Ausschalten eines Brennstoffzellensystems (1), umfassend eine Brennstoffzelle (2) zur Stromerzeugung aus Oxidatorgas und Brenngas sowie einen Reformer (3) mit einem Katalysator (16) zur Brenngaserzeugung aus Oxidatorgas und Kraftstoff,
- bei dem der Brenngaserzeugungsbetrieb des Reformers (3) beendet wird,
- bei dem nach dem Beenden des Brenngaserzeugungsbetriebs ein Regenerationsprozess zum Regenerieren des Katalysators (16) durchgeführt wird,
- bei dem der Regenerationsprozess erst dann gestartet wird, wenn die Brennstoffzelle (2) unter eine vorbestimmte Brennstoffzellengrenztemperatur (T_{B}) abgekühlt ist.

7. Verfahren nach Anspruch 6,
**dadurch gekennzeichnet,**
**dass** der Reformer (3) während des Regenerationsprozesses mit Oxidatorgas versorgt wird.

8. Verfahren nach Anspruch 7,
**dadurch gekennzeichnet,**
- **dass** während des Regenerationsprozesses die Oxidatorgasversorgung des Reformers (3) reduziert oder beendet wird, sobald sich die Brennstoffzelle (2) über die Brennstoffzellengrenztemperatur (T_{B}) aufheizt, und/oder
- **dass** während des Regenerationsprozesses die Oxidatorgasversorgung des Reformers (3) reduziert oder beendet wird, sobald sich der Reformer (3) über eine vorbestimmte Reformergrenztemperatur (T_{R}) aufheizt, und/oder
- **dass** während des Regenerationsprozesses die Oxidatorgasversorgung des Reformers (3) erhöht oder erneut gestartet wird, sobald die Brennstoffzelle (2) wieder unter die Brennstoffzellengrenztemperatur (T_{B}) abgekühlt ist und/oder sobald der Reformer (3) unter die Reformergrenztemperatur (T_{R}) abgekühlt ist, und/oder
- **dass** der Regenerationsprozess beendet wird, sobald die O-xidatorgasversorgung des Reformers (3) zu einer Abkühlung der Brennstoffzelle (2) und/oder des Reformers (3) führt.

9. Verfahren nach Anspruch 6,
**dadurch gekennzeichnet,**
**dass** der Reformer (3) während des Regenerationsprozesses als Brenner betrieben wird.

10. Verfahren nach Anspruch 9,
**dadurch gekennzeichnet,**
- **dass** während des Regenerationsprozesses der Brennerbetrieb des Reformers (3) reduziert oder beendet wird, sobald sich die Brennstoffzelle (2) über die Brennstoffzellengrenztemperatur (T_{B}) aufheizt und/oder sobald sich der Reformer (3) über eine vorbestimmte Reformergrenztemperatur (T_{R}) aufheizt, und/oder
- **dass** während des Regenerationsprozesses der Brennerbetrieb des Reformers (3) erhöht oder erneut gestartet wird, sobald die Brennstoffzelle (2) wieder unter die Brennstoffzellengrenztemperatur (T_{B}) abgekühlt ist und/oder sobald der Reformer (3) unter die Reformergrenztemperatur (T_{R}) abgekühlt ist.

## Claims

1. A fuel cell system, more preferably for a motor vehicle,
- with a fuel cell (2) for power generation from oxidant gas and from fuel gas, having an anode inlet (4), an anode outlet (5), a cathode inlet (6), a cathode outlet (7) and at least one power connection (8),
- with a reformer (3) containing a catalyst (16) for the fuel gas generation from oxidant gas and from fuel and which comprises a fuel inlet (12), an oxidant inlet (13) and a fuel gas outlet (17),
- with a fuel gas line (18), connecting the fuel gas outlet (17) with the anode inlet (4),
- with an oxidant feeding device (19) for supplying the fuel cell (2) and the reformer (3) with oxidant gas,
- with a fuel feeding device (25) for supplying the reformer (3) with fuel,
- with a control (41) for actuating the oxidant feeding device (19) and the fuel feeding device (25), **characterized**
- **in that** a sensor system (42) for determining the temperature of the fuel cell (2) is provided,
- **in that** the control (41) is designed so that when the fuel cell system (1) is switched off, it carries out a regeneration process for regenerating the catalyst (16),
- **in that** the control (41) is designed so that it only starts the regeneration process when the temperature of the fuel cell (2) is below a predetermined fuel cell limit temperature (T_{B}).

2. The fuel cell system according to Claim 1, **characterized in that** it activates the oxidant feeding device (19) for supplying the reformer (3) with oxidant gas during the regeneration process.

3. The fuel cell system according to Claim 2, **characterized**
- **in that** the control (41) is designed so that it activates the oxidant feeding device (19) for reducing or terminating the supply of the reformer (3) with oxidant gas during the regeneration process as soon as the temperature of the fuel cell (2) is above the fuel cell limit temperature (T_{B}), and/or
- **in that** the sensor system (42) is also designed for determining a temperature of the reformer (3), and/or
- **in that** the control (41) is designed so that it activates the oxidant feeding device (19) for reducing or terminating the supply of the reformer (3) with oxidant gas during the regeneration process as soon as the temperature of the reformer (3) is above a predetermined reformer limit temperature (T_{R}), and/or
- **in that** the control (41) is designed so that it activates the oxidant feeding device (19) for increasing or renewed starting of the supply of the reformer (3) with oxidant gas during the regeneration process as soon as the temperature of the fuel cell (2) is again below the fuel cell limit temperature (T_{B}) and/or as soon as the temperature of the reformer (3) is again below the reformer limit temperature (T_{R}), and/or
- **in that** the control (41) is designed so that it terminates the regeneration process as soon as the supply of the reformer (3) with oxidant gas results in a lowering of the temperature in the fuel cell (2) and/or in the reformer (3).

4. The fuel cell system according to Claim 1, **characterized in that** the control 41 is designed so that during the regeneration process it operates the reformer (3) as burner and suitably activates the oxidant feeding device (19) and the fuel feeding device (25) for supplying the reformer (3) with oxidant gas and fuel.

5. The fuel cell system according to Claim 4, **characterized**
- **in that** the control (41) is designed so that it reduces or terminates the burner operation of the reformer (3) during the regeneration process as soon as the temperature of the fuel cell (2) is above the fuel cell limit temperature (T_{B}), and/or
- **in that** the sensor system (42) is also designed for determining a temperature of the reformer (3), and/or
- **in that** the control (41) is designed so that it reduces or terminates the burner operation of the reformer (3) during the regeneration process as soon as the temperature of the reformer (3) is above a predetermined reformer limit temperature (T_{R}) and/or
- **in that** the control (41) is designed so that it increases or again starts the burner operation of the reformer (3) during the regeneration process as soon as the temperature of the fuel cell (2) is again below the fuel cell limit temperature (T_{B}) and/or as soon as the temperature of the reformer (3) is again below the reformer limit temperature (T_{R}).

6. A method for switching off a fuel cell system (1) comprising a fuel cell (2) for power generation from oxidant gas and fuel gas as well as a reformer (3) with a catalyst (16) for fuel gas generation from oxidant gas and fuel,
- wherein the fuel gas generation operation of the reformer (3) is terminated,
- wherein following the termination of the fuel gas generation operation a regeneration process for regenerating the catalyst (16) is carried out,
- wherein the regeneration process is only started when the fuel cell (2) has cooled down below a predetermined fuel cell limit temperature (T_{B}).

7. The method according to Claim 6, **characterized in that** the reformer (3) during the regeneration process is supplied with oxidant gas.

8. The method according to Claim 7, **characterized**
- **in that** during the regeneration process the oxidant gas supply of the reformer (3) is reduced or terminated, as soon as the fuel cell (2) is heated above the fuel cell limit temperature (T_{B}), and/or
- **in that** during the regeneration process the oxidant gas supply of the reformer (3) is reduced or terminated as soon as the reformer (3) is heated above a predetermined reformer limit temperature (T_{R}) and/or
- **in that** during the regeneration process the oxidant gas supply of the reformer (3) is increased or re-started as soon as the fuel cell (2) has again cooled down to below the fuel cell limit temperature (T_{B}) and/or as soon as the reformer (3) has cooled down to below the reformer limit temperature (T_{R}), and/or
- **in that** the regeneration process is terminated as soon as the oxidant gas supply of the reformer (3) leads to a cooling of the fuel cell (2) and/or the reformer (3).

9. The method according to Claim 6, **characterized in that** the reformer (3) is operated as burner during the regeneration process.

10. The method according to Claim 9, **characterized**
- **in that** during the regeneration process the burner operation of the reformer (3) is reduced or terminated as soon as the fuel cell (2) is heated above the fuel cell limit temperature (T_{B}) and/or as soon as the reformer (3) is heated above a predetermined reformer limit temperature (T_{R}), and/or
- **in that** during the regeneration process the burner operation of the reformer (3) is increased or re-started as soon as the fuel cell (2) has again cooled down to below the fuel cell limit temperature (T_{B}) and/or as soon as the reformer (3) has cooled down to below the reformer limit temperature (T_{R}).

## Revendications

1. Système de cellule de combustible, en particulier pour un véhicule automobile, comprenant
- une cellule de combustible (2) pour la production de courant à partir de gaz oxydant et à partir de gaz combustible, qui présente une entrée d'anode (4), une sortie d'anode (5), une entrée de cathode (6), une sortie de cathode (7) et au moins un branchement de courant (8),
- un reformeur (3), qui contient un catalyseur (16) pour la production de gaz combustible à partir de gaz oxydant et de carburant et qui présente une entrée de carburant (12), une entrée d'oxydant (13) et une sortie de gaz combustible (17),
- une conduite de gaz combustible (18), qui relie la sortie de gaz combustible (17) à l'entrée d'anode (4),
- un dispositif d'arrivée d'oxydant (19) pour l'alimentation de la cellule de combustible (2) et du reformeur (3) avec du gaz oxydant,
- un dispositif d'arrivée de carburant (25) pour l'alimentation du reformeur (3) avec du carburant,
- une commande (41) pour l'actionnement du dispositif d'arrivée d'oxydant (19) et du dispositif d'arrivée de carburant (25),
**caractérisé en ce que**,
- un capteur (42) est prévu pour la détermination de la température de la cellule de combustible (2),
- la commande (41) est conçue de telle sorte qu'elle effectue lors de la mise hors circuit du système de cellule de combustible (1) un processus de régénération pour la régénération du catalyseur (16),
- **en ce que** la commande (41) est conçue de telle sorte qu'elle ne démarre le processus de régénération que dans le cas où la température de la cellule de combustible (2) est inférieure à une température limite prédéfinie de cellule de combustible (T_{B}).

2. Système de cellule de combustible selon la revendication 1,
**caractérisé en ce que**
la commande (41) est conçue de telle sorte qu'elle actionne pendant le processus de régénération le dispositif d'arrivée d'oxydant (19) pour l'alimentation du reformeur (3) avec du gaz oxydant.

3. Système de cellule de combustible selon la revendication 2,
**caractérisé en ce que**
- la commande (41) est conçue de telle sorte qu'elle active pendant le processus de régénération le dispositif d'arrivée d'oxydant (19) pour la réduction ou l'achèvement de l'alimentation du reformeur (3) avec du gaz oxydant dès que la température de la cellule de combustible (2) est supérieure à la température limite de cellule de combustible (T_{B}), et/ou
- **en ce que** le capteur (42) est conçu également pour déterminer une température du reformeur (3), et/ou
- **en ce que** la commande (41) est conçue de telle sorte qu'elle active pendant le processus de régénération le dispositif d'arrivée d'oxydant (19) pour la réduction ou l'achèvement de l'alimentation du reformeur (3) avec du gaz oxydant dès que la température du reformeur (3) est supérieure à une température limite prédéfinie du reformeur (T_{R}), et/ou
- **en ce que** la commande (41) est conçue de telle sorte qu'elle active pendant le processus de régénération le dispositif d'arrivée d'oxydant (19) pour l'élévation ou pour le redémarrage de l'alimentation du reformeur (3) avec du gaz oxydant dès que la température de la cellule de combustible (2) est à nouveau inférieure à la température limite de cellule de combustible (T_{B}) et/ou dès que la température du reformeur (3) est à nouveau inférieure à la température limite du reformeur (T_{R}), et/ou
- **en ce que** la commande (41) est conçue de telle sorte qu'elle achève le processus de régénération dès que l'alimentation du reformeur (3) avec du gaz oxydant entraîne un abaissement de température dans la cellule de combustible (2) et/ou dans le reformeur (3) .

4. Système de cellule de combustible selon la revendication 1,
**caractérisé en ce que**
la commande (41) est conçue de telle sorte qu'elle exploite pendant le processus de régénération le reformeur (3) comme brûleur et active de façon appropriée le dispositif d'arrivée d'oxydant (19) et le dispositif d'arrivée de carburant (25) pour l'alimentation du reformeur (3) avec du gaz oxydant et du carburant.

5. Système de cellule de combustible selon la revendication 4,
**caractérisé en ce que**
- la commande (41) est conçue de telle sorte qu'elle réduit ou achève pendant le processus de régénération le fonctionnement du brûleur du reformeur (3) dès que la température de la cellule de combustible (2) est supérieure à la température limite de cellule de combustible (T_{B}), et/ou
- **en ce que** le capteur (42) est conçu également pour déterminer une température du reformeur (3), et/ou
- **en ce que** la commande (41) est conçue de telle sorte qu'elle réduit ou termine pendant le processus de régénération le fonctionnement du brûleur du reformeur (3) dès que la température du reformeur (3) est supérieure à une température limite prédéfinie du reformeur (T_{R}), et/ou
- **en ce que** la commande (41) est conçue de telle sorte qu'elle augmente ou redémarre pendant le processus de régénération le fonctionnement du brûleur du reformeur (3) dès que la température de la cellule de combustible (2) est à nouveau inférieure à la température limite de cellule de combustible (T_{B}) et/ou dès que la température du reformeur (3) est à nouveau inférieure à la température limite du reformer (T_{R}) .

6. Procédé pour la mise hors circuit d'un système de cellule de combustible (1), comprenant une cellule de combustible (2) pour la production de courant à partir de gaz oxydant et de gaz combustible et un reformeur (3) avec un catalyseur (16) pour la production de gaz combustible à partir de gaz oxydant et de carburant,
- dans lequel le fonctionnement de production de gaz combustible du reformeur (3) est terminé,
- dans lequel, après l'achèvement du fonctionnement de production de gaz combustible, un processus de régénération est effectué pour la régénération du catalyseur (16),
- dans lequel le processus de régénération n'est redémarré que lorsque la cellule de combustible (2) est refroidie au-dessous d'une température limite prédéfinie de cellule de combustible (T_{B}).

7. Procédé selon la revendication 6,
**caractérisé en ce que**
le reformeur (3) est alimenté avec du gaz oxydant pendant le processus de régénération.

8. Procédé selon la revendication 7,
**caractérisé en ce que**,
- pendant le processus de régénération, l'alimentation en gaz oxydant du reformeur (3) est réduite ou achevée dès que la cellule de combustible (2) se réchauffe au-dessus de la température limite de cellule de combustible (T_{B}), et/ou
- **en ce que**, pendant le processus de régénération, l'alimentation en gaz oxydant du reformeur (3) est réduite ou achevée dès que le reformeur (3) se réchauffe au-dessus d'une température limite prédéfinie du reformeur (T_{R}), et/ou
- **en ce que**, pendant le processus de régénération, l'alimentation en gaz oxydant du reformeur (3) est augmentée ou redémarrée dès que la cellule de combustible (2) est refroidie à nouveau au-dessous de la température limite de cellule de combustible (T_{B}), et/ou dès que le reformeur (3) est refroidi au-dessous de la température limite de reformeur (T_{R}), et/ou
- **en ce que** le processus de régénération est achevé dès que l'alimentation en gaz oxydant du reformeur (3) entraîne un refroidissement de la cellule de combustible (2) et/ou du reformeur (3).

9. Procédé selon la revendication 6,
**caractérisé en ce que**
le reformeur (3) est exploité pendant le processus de régénération comme brûleur.

10. Procédé selon la revendication 9,
**caractérisé en ce que**,
- pendant le processus de régénération, le fonctionnement du brûleur du reformeur (3) est réduit ou achevé dès que la cellule de combustible (2) se réchauffe au-dessus de la température limite de cellule de combustible (T_{B}) et/ou dès que le reformeur (3) se réchauffe au-dessus d'une température limite prédéfinie du reformeur (T_{R}), et/ou
- **en ce que**, pendant le processus de régénération, le fonctionnement du brûleur du reformeur (3) est augmenté ou redémarré dès que la cellule de combustible (2) est refroidie à nouveau au-dessous de la température limite de cellule de combustible (T_{B}) et/ou dès que le reformeur (3) est refroidi au-dessous de la température limite de reformeur (T_{R}).
